# EUROPÄISCHE PATENTSCHRIFT

(11) **EP 0 752 225 B1**
(45) Veröffentlichungstag und Bekanntmachung des Hinweises auf die Patenterteilung: **08.11.2000**
(21) Anmeldenummer: 96110439.5
(22) Anmeldetag: 28.06.1996
(51) Int. Cl.: A47C 11/00, A47C 1/124

(54) **Einrichtung zur Verbindung wenigstens eines Sitzes mit mindestens einem Unterteil**
A device for connecting a seat to a support
Dispositif de fixation d'un siège à un support

(30) Priorität: 07.07.1995 DE 29511059 U
(43) Veröffentlichungstag der Anmeldung: 08.01.1997
(73) Patentinhaber: EISEN- UND DRAHTWERK ERLAU AKTIENGESELLSCHAFT, D-73431 Aalen (DE)
(72) Erfinder: Müller, Anton, 73432 Aalen (DE)
(74) Vertreter: Jackisch-Kohl, Anna-Katharina

(56) Entgegenhaltungen:
- BE-A- 417 634
- DE-U- 8 802 360

## Beschreibung

Die Erfindung betrifft eine Einrichtung zur Verbindung wenigstens eines Sitzes mit einem Unterteil nach dem Oberbegriff des Anspruches 1.

Es ist bekannt, Sitze mit Klemmelementen in Form von Klemmlaschen auf einer Zarge zu befestigen, die auf Ständern oder an einer Wand gehaltert sein kann. Die Zarge erstreckt sich über die Länge des Sitzes bzw. einer aus mehreren Sitzen bestehenden Baugruppe. Durch Vandalismus kommt es vor, daß der Sitz- oder Rückenteil des Sitzes längs der Zarge verrutscht. Die Baugruppe sieht dann nicht nur unschön aus, sondern beim Verrutschen des jeweiligen Sitzes auf der Zarge wird deren Oberfläche beschädigt. Dann tritt schon nach kurzer Zeit Korrosion auf. Die durchlaufende Zarge, die zwischen Sitz- und Rückenteil verläuft, verschließt den zwischen diesen beiden Teilen des Sitzes bestehenden Spalt. Durch ihn werden häufig beispielsweise leere Zigarettenschachteln, leere Blechdosen und dergleichen gesteckt, die infolge der Zarge durch den Spalt nicht nach unten fallen können, sondern im Spalt und damit zum Teil auf der Sitzfläche liegen bleiben.

Es ist eine Sitzgruppe bekannt (DE-U-88 02 360), bei der zwei Sitze nebeneinander auf einer horizontalen Zarge sitzen. An den beiden Zargenenden sind Aufnahmeteile vorgesehen, in die die freien Enden von Rahmenteilen der Sitz- und der Rückenfläche der Sitze eingesteckt und dort axial gesichert sind.

Es ist auch bekannt (BE-A-417 634), Rohre mittels Klemmlaschen zu befestigen, die mittels der Klemmlaschen in Vertiefungen von Gegenstücken gedrückt werden.

Der Erfindung liegt die Aufgabe zugrunde, die gattungsgemäße Einrichtung so auszubilden, daß bei konstruktiv einfacher Ausbildung eine sichere Befestigung des Sitzes auf dem Unterteil gewährleistet ist.

Diese Aufgabe wird bei der gattungsgemäßen Einrichtung erfindungsgemäß mit den kennzeichnenden Merkmalen des Anspruches 1 gelöst.

Die erfindungsgemäße Einrichtung erlaubt die Befestigung des Sitzes ohne Verwendung einer Zarge. Mit der Steckaufnahme des Grundkörpers kann die erfindungsgemäße Einrichtung einfach am Unterteil befestigt werden. Der Grundkörper kann beispielsweise auf einen aufwärts ragenden Ständer gesteckt werden. Die Klemmteile, mit denen die Verbindung zwischen dem Sitz und dem Grundkörper und damit mit dem Unterteil erfolgt, werden an den Anlageflächen des Grundkörpers so befestigt, daß die Anlageteile der Klemmelemente an den Anlageflächen des Grundkörpers anliegen und dadurch einwandfrei gegenüber dem Grundkörper ausgerichtet sind. Die Rahmenteile des Sitzes greifen in die Vertiefungen des Grundkörpers ein und werden durch die Klemmelemente in den Vertiefungen festgeklemmt. Da in die Steckaufnahme des Grundkörpers das Unterteil eingesetzt wird, kann der Grundkörper und damit der Sitz nicht quer zum Unterteil verschoben werden, so daß eine Beschädigung des Sitzes und/oder des Unterteiles ausgeschlossen ist.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen
- Fig. 1: in Vorderansicht eine erfindungsgemäße Verbindungseinrichtung, die auf einem Ständer montiert ist,
- Fig. 2: eine Draufsicht auf die montierte Verbindungseinrichtung gemäß Fig. 1,
- Fig. 3: eine Vorderansicht eines Ständers, auf dem die erfindungsgemäße Verbindungseinrichtung montierbar ist,
- Fig. 4: eine Seitenansicht des Ständers gemäß Fig. 3,
- Fig. 5: einen Querschnitt durch den Ständer gemäß Fig. 3,
- Fig. 6: teilweise in Vorderansicht und teilweise im Längsschnitt die erfindungsgemäße Verbindungseinrichtung gemäß Fig. 1,
- Fig. 7: eine Seitenansicht der Verbindungseinrichtung gemäß Fig. 6,
- Fig. 8: eine Draufsicht auf die Verbindungseinrichtung gemäß Fig. 6,
- Fig. 9: eine Draufsicht auf ein Anschlagelement,
- Fig. 10: eine Vorderansicht des Anschlagelementes gemäß Fig. 9,
- Fig. 11: in Seitenansicht das Anschlagelement gemäß Fig. 9 in gestrecktem Zustand,
- Fig. 12: eine Vorderansicht des Anschlagelementes gemäß Fig. 11,
- Fig. 13: ein Klemmelement der erfindungsgemäßen Verbindungseinrichtung in gestrecktem Zustand,
- Fig. 14: in Vorderansicht das Klemmelement gemäß Fig. 13 in geformtem Zustand,
- Fig. 15: einen Schnitt längs der Linie XV-XV in Fig. 14,
- Fig. 16: eine an einem Ständer montierte zweite Ausführungsform einer erfindungsgemäßen Verbindungseinrichtung,
- Fig. 17: eine Draufsicht auf die Anordnung gemäß Fig. 16,
- Fig. 18: eine Draufsicht auf die Verbindungseinrichtung gemäß Fig. 16,
- Fig. 19: eine Ansicht in Richtung des Pfeiles XIX in Fig. 18,
- Fig. 20: eine Ansicht in Richtung des Pfeiles XX in Fig. 18,
- Fig. 21: eine Vorderansicht der Verbindungseinrichtung gemäß Fig. 18,
- Fig. 22: in perspektivischer Darstellung eine Sitzeinheit, an der Verbindungseinrichtungen gemäß Fig. 1 und Fig. 16 vorgesehen sind.

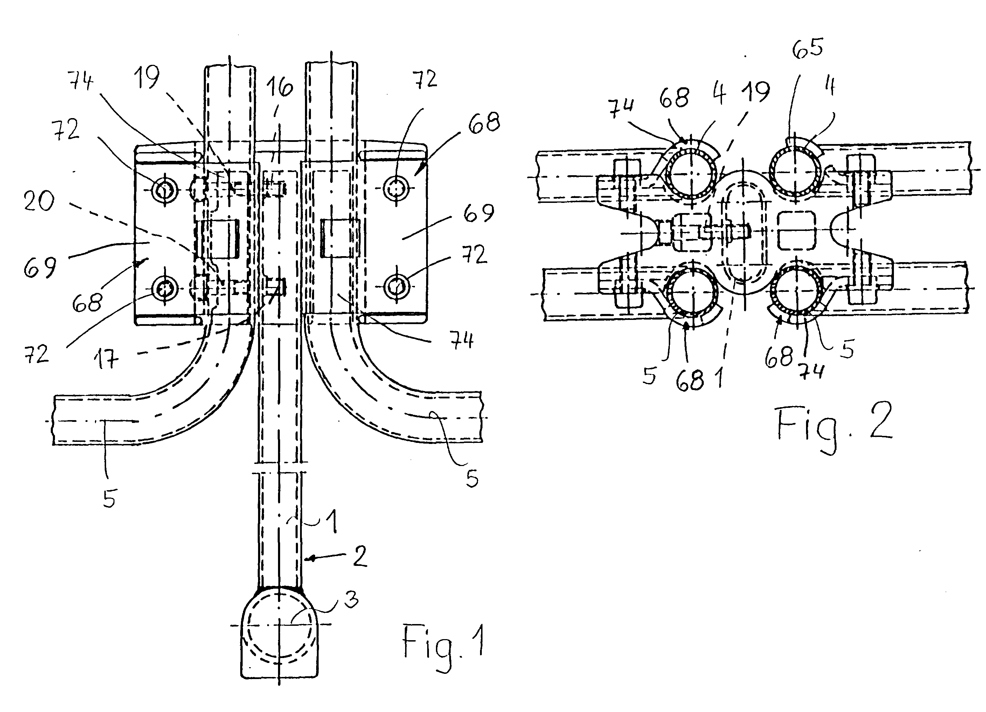

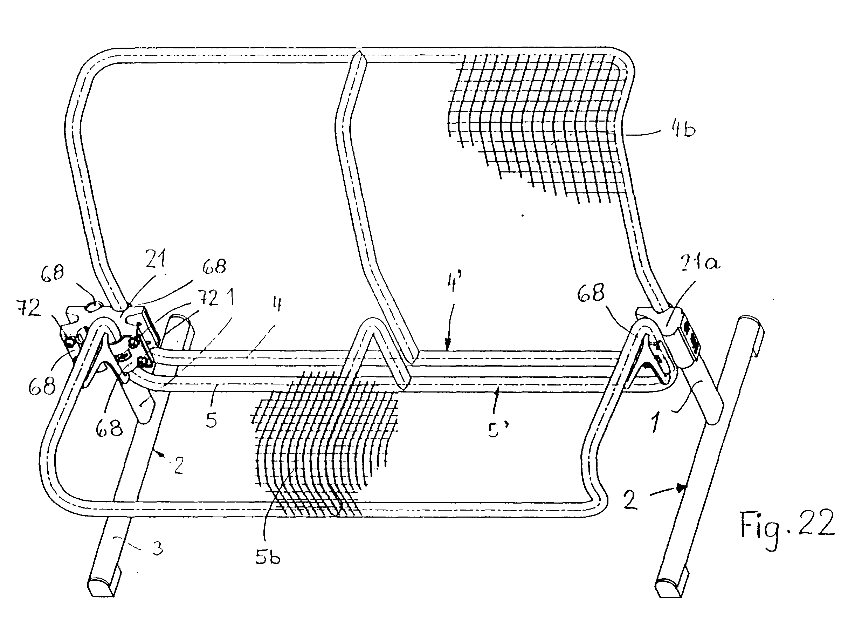

Die Verbindungseinrichtung dient dazu, Sitz- und Rückenteile eines Sitzes miteinander und mit einem Ständer so zu verbinden, daß eine Zarge nicht erforderlich ist. Wie die Fig. 1, 2 und 22 zeigen, wird die Verbindungseinrichtung auf einem vertikalen Ständerteil 1 eines Ständers 2 montiert, der mit einem senkrecht zum Ständerteil liegenden Fuß 3 auf dem Untergrund steht. Der Ständerteil 1 kann auch unmittelbar im Untergrund verankert sein. Mit der Verbindungseinrichtung werden zwei nebeneinander liegende Sitze gehalten, von denen jeweils nur Rahmenteile 4 und 5 des Rückenteiles sowie des Sitzteiles dargestellt sind. Diese Rahmenteile 4, 5 sind Bestandteil von Rahmen 4', 5' (Fig. 22), zwischen denen jeweils eine Rückenfläche 4b bzw. Sitzfläche 5b vorgesehen ist, die aus einem Gitter aus Draht oder Kunststoff, einer Kunststoffschale oder dergleichen gebildet sein kann. Die Ausbildung solcher Rücken- und Sitzteile bei Möbeln ist bekannt und wird darum nicht im einzelnen erläutert.

Die Verbindungseinrichtungen werden in noch zu beschreibender Weise auf das obere Ende des Ständerteiles 1 gesteckt und befestigt. Die Rahmenteile 4, 5 werden an der Verbindungseinrichtung durch Klemmelemente gehalten.

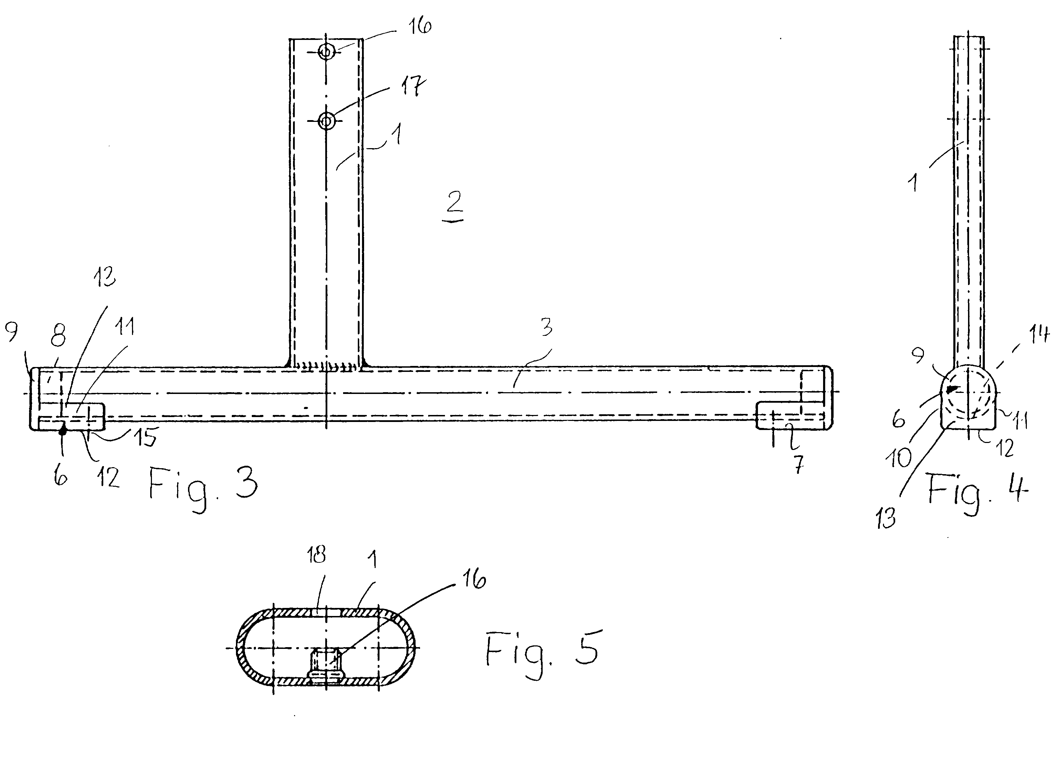

Wie die Fig. 3 bis 5 zeigen, ist der Ständerteil 1 durch ein im Querschnitt ovales Rohr gebildet. Es ist auf dem Fuß 3 außermittig festgeschweißt. Der Fuß 3 wird vorteilhaft durch ein im Querschnitt kreisförmiges Rohr gebildet, in dessen beide Enden jeweils ein Auflagerstück 6, 7 gesteckt ist, das vorteilhaft aus Kunststoff besteht. Die beiden Auflagerstücke 6, 7 sind gleich ausgebildet. Darum wird im folgenden nur das Auflagerstück 6 im einzelnen beschrieben. Es hat einen zylindrischen Ansatz 8, der in das Ende des Fußes 3 ragt und an der Innenwandung des Fußes über den Umfang anliegt. Der Ansatz 8 schließt an einen Deckel 9 an, dessen Rand über 180° kreisförmig verläuft (Fig. 4) und dann in zueinander parallele Ränder 10 und 11 übergeht, die durch einen ebenen Boden 12 miteinander verbunden sind. Das Auflagerstück 6 liegt mit dem Boden 12 auf dem jeweiligen Untergrund auf. Die Ränder 10 und 11 sind an entsprechenden, parallel zueinander verlaufenden Seitenflächen eines Aufnahmestückes 13 vorgesehen, das eine im Querschnitt teilkreisförmige Vertiefung 14 aufweist, in der der Fuß 3 mit seinem Ende liegt. Der Deckel 9 hat im Bereich seines teilkreisförmigen Randes einen dem Außendurchmesser des Fußes 3 entsprechenden Außendurchmesser. Dadurch wird am Übergang vom Fuß 3 zum Deckel 9 kein Absatz gebildet, an dem sich Schmutz und dergleichen ablagern könnte. Die Seitenwände 10, 11 des Aufnahmestückes 13 schließen tangential an den Fuß 3 an, so daß auch am Übergang von den Seitenwänden zum Fuß 3 kein Absatz gebildet wird.

Um das Auflagerstück 6 axial am Fuß 3 zu sichern, wird es mit wenigstens einer, in Fig. 3 nur durch eine strichpunktierte Linie angedeuteten Schraube 15 befestigt.

Die Auflagerstücke 6, 7 schließen den Fuß 3 an beiden Enden dicht ab, so daß Feuchtigkeit, Schmutz und dergleichen nicht in den Fuß 3 gelangen kann. Außerdem halten sie den Fuß 3 auf Abstand zum Untergrund, da der ebene Boden 12 der Auflagerstücke 6, 7 mit Abstand unterhalb des Fußes 3 liegt.

Im dargestellten Ausführungsbeispiel ist der Ständerteil 1 außermittig auf dem Fuß 3 vorgesehen. Selbstverständlich kann der Ständerteil 1 auch in halber Länge auf dem Fuß 3 festgeschweißt sein.

Im oberen Bereich ist der Ständerteil 1 mit zwei mit Abstand übereinander liegenden Blindmuttern 16 und 17 versehen, die innerhalb des Ständerteiles 1 vorgesehen sind. Die Blindmuttern 16, 17 sind an den Längsseiten des Ständerteiles 1 vorgesehen. In der gegenüberliegenden Längswand befinden sich entsprechende Öffnungen 18, deren Achsen fluchtend zu den Achsen der Blindmuttern 16, 17 liegen. Der Ständerteil 1 ist im Bereich der Blindmuttern 16, 17 mit entsprechenden Durchgangsöffnungen versehen, so daß zur Befestigung der Verbindungseinrichtung von außen entsprechende Schrauben oder Gewindebolzen 19, 20 (Fig. 1 und 2) in die Blindmuttern 16, 17 geschraubt werden können.

Der Ständerteil 1 kann abweichend vom dargestellten Ausführungsbeispiel auch kreisförmigen oder eckigen Querschnitt aufweisen. Entsprechend kann der Fuß 3 auch ovalen oder eckigen Querschnitt haben.

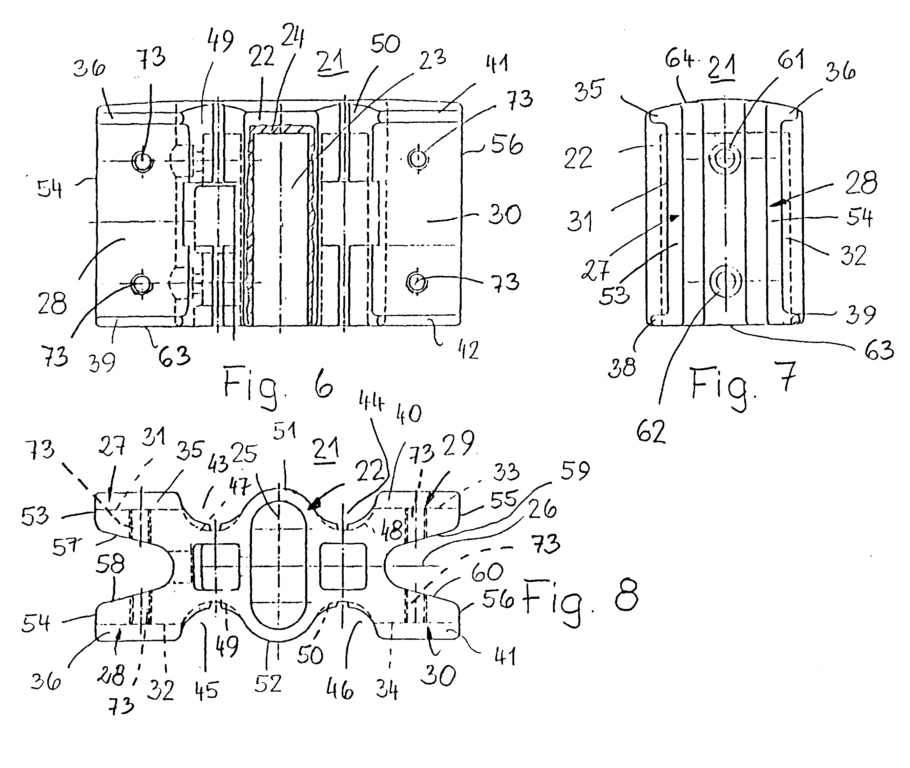

Die Verbindungseinrichtung hat einen Grundkörper 21 (Fig. 6 bis 8 und 22). Er hat ein Mittelstück 22, das eine Aufnahme 23 aufweist, in der das obere Ende des Ständerteiles 1 bei montierter Verbindungseinrichtung liegt. Der Querschnitt der Aufnahme 23 ist an den äußeren Querschnitt des Ständerteiles 1 derart angepaßt, daß der Ständerteil 1 über seinen Umfang an der Innenwandung der Aufnahme 23 anliegt. Nach oben ist die Aufnahme 23 durch eine Wand 24 (Fig. 6) geschlossen. Die Aufnahme 23 hat, wie Fig. 8 zeigt, ovalen Innenquerschnitt. Die Längsmittelebene 25 der Aufnahme 23 liegt senkrecht zur Längsmittelebene 26 des Grundkörpers 21.

An das Mittelstück 22 schließen zu beiden Seiten zwei mit Abstand einander jeweils gegenüberliegende Schenkel 27, 28 und 29, 30 an, die sich jeweils in Richtung auf ihre freien Enden, in Draufsicht gemäß Fig. 8 gesehen, verjüngen. Die Schenkel 27 bis 30 erstrecken sich über die gesamte Höhe des Grundkörpers 21 und haben parallel zueinander liegende ebene Anlageflächen 31 bis 34. Sie liegen senkrecht zur Längsmittelebene 25 der Aufnahme 23 bzw. parallel zur Längsmittelebene 26 des Grundkörpers 21. Die auf der gleichen Seite der Längsmittelebene 26 liegenden Anlageflächen 31, 33 und 32, 34 liegen fluchtend zueinander. Wie sich aus Fig. 7 ergibt, sind die Schenkel 27 bis 30 am oberen und unteren Ende jeweils mit einem nach außen gerichteten Vorsprung 35 bis 42 versehen. Sie erstrecken sich über die Länge der Schenkel 27 bis 30.

Zwischen den Schenkeln 27 bis 30 und dem Mittelstück 22 ist jeweils eine im Querschnitt teilkreisförmige Vertiefung 43 bis 46 vorgesehen, in welche die Rahmenteile 4, 5 (Fig. 2) zu liegen kommen. Die Vertiefungen 43 bis 46 erstrecken sich über die ganze Höhe des Grundkörpers 21. Die ebenen Anlageflächen 31 bis 34 der Schenkel 27 bis 30 gehen in den Boden 47 bis 50 der Vertiefungen 43 bis 46 über. Die Böden 47 bis 50 gehen stetig gekrümmt in die einander gegenüberliegenden Außenseiten 51 und 52 des Mittelstückes 22 über, die teilkreisförmig gekrümmt verlaufen und entgegengesetzt zu den Böden 47 bis 50 gekrümmt sind. Die Außenseiten 51, 52 bilden die Schmalseiten des Mittelstückes 22.

Die Schenkel 27 bis 30 haben ebene Stirnseiten 53 bis 56, die senkrecht zu den Anlageflächen 31 bis 34 liegen und sich über die Höhe des Grundkörpers 21 erstrecken.

Die Stirnseiten 53 und 54 sowie 55 und 56 liegen fluchtend zueinander (Fig. 8). Die Stirnflächen 53 und 54 der einander gegenüberliegenden Schenkel 27 und 28 schließen an Schrägflächen 57 und 58 an, die in Richtung auf das Mittelstück 22 konvergieren und bogenförmig ineinander übergehen. Auch die Stirnseiten 55 und 56 der anderen Schenkel 29, 30 schließen an in Richtung auf das Mittelstück 22 konvergierende Schrägflächen 59 und 60 an, die bogenförmig gekrümmt ineinander übergehen.

Im Übergangsbereich zwischen den beiden Schrägflächen 57 und 58 sind Durchgangsöffnungen 61 und 62 vorgesehen (Fig. 7), durch welche die Schrauben 19, 20 (Fig. 1) gesteckt werden können, mit denen der Grundkörper 21 am Ständerteil 1 befestigt wird. Die Durchgangsöffnungen 61, 62 fluchten mit den Blindmuttern 16, 17 des Ständerteiles 1. Vorteilhaft sind auch im Übergangsbereich zwischen den Schrägflächen 59 und 60 der Schenkel 29, 30 entsprechende Durchgangsöffnungen vorgesehen.

Die Unterseite 63 (Fig. 6 und 7) des Grundkörpers 21 ist vorteilhaft eben, während die gegenüberliegende Oberseite 64 konvex gekrümmt verläuft, in Ansicht gemäß Fig. 7 gesehen.

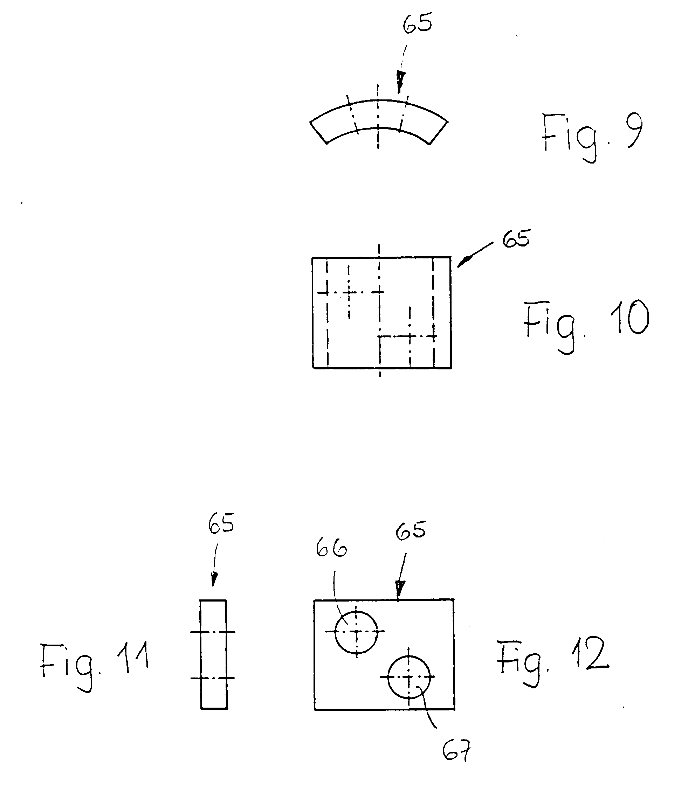

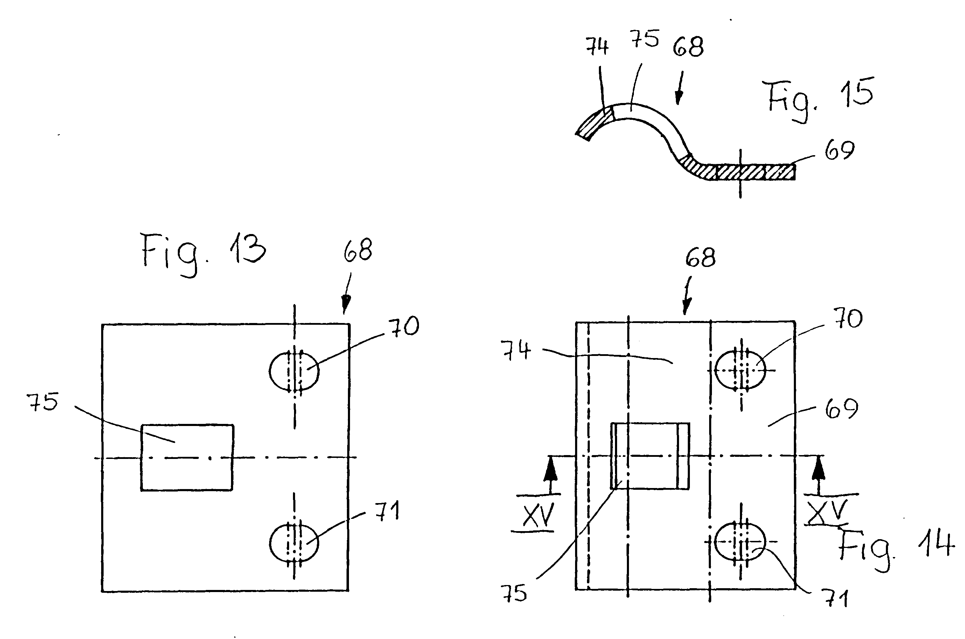

Um eine einwandfreie Lagesicherung der Rahmenteile 4, 5 gegenüber der Verbindungseinrichtung zu gewährleisten, sind auf den vertikal verlaufenden Abschnitten der Rahmenteile 4, 5 Anschlagelemente 65 (Fig. 9 bis 12) befestigt. Das Anschlagelement 65 wird aus einem ebenen Plattenstück gefertigt, das in Ansicht rechteckförmigen Umriß hat und etwa diagonal versetzt zueinander zwei vorzugsweise gleich große Öffnungen 66 und 67 aufweist (Fig. 11 und 12). Dieses zunächst ebene Anschlagelement 65 wird so gebogen, daß es auf der Außenseite des jeweiligen Rahmenteiles 4, 5 ganzflächig anliegt. In Fig. 2 ist dies für den rechten oberen Rahmenteil 4 im einzelnen dargestellt. Durch die Öffnungen 66, 67 können entsprechende Schrauben gesteckt werden, mit denen sich das Anschlagelement 65 lösbar am Rahmenteil 4, 5 befestigen läßt. Vorteilhaft dienen die Öffnungen 66, 67 jedoch zum Anschweißen des Anschlagelementes 65 am Rahmenteil 4, 5.

Zur Befestigung der Rahmenteile 4, 5 und damit des Rükken- und des Sitzteiles des jeweiligen Sitzes werden Klemmelemente 68 verwendet (Fig. 13 bis 15 und 22). Sie sind jeweils gleich ausgebildet und werden aus einem ebenen Teil (Fig. 13) gefertigt, das rechteckigen Umriß hat. Es wird in die in Fig. 15 erkennbare Form plastisch verformt. Das Klemmelement 68 hat einen ebenen Anlageteil 69, mit dem es in der Einbaulage an der jeweiligen Anlagefläche 31 bis 34 der Schenkel 27 bis 30 des Grundkörpers 21 flächig anliegt. Der Anlageteil 69 weist zwei mit Abstand übereinander liegende Öffnungen 70 und 71 auf, die vorteilhaft ovalen bzw. elliptischen Umriß haben. Durch diese Öffnungen 70, 71 werden Schrauben 72 (Fig. 1 und 22) gesteckt, die in Gewindebohrungen 73 (Fig. 6 und 8) in den Schenkeln 27 bis 30 des Grundkörpers 21 geschraubt werden. Die Achsen der Gewindebohrungen 73 liegen senkrecht zur Längsmittelebene 26 des Grundkörpers 21. Da die Öffnungen 70, 71 des Klemmelementes 68 oval bzw. elliptisch ausgebildet sind, kann das Klemmelement 68 in Richtung der größeren Achse der Öffnung 70, 71 senkrecht zur Achse der Gewindebohrungen 73 relativ zum Grundkörper 21 verschoben werden. Vorteilhaft ist auch die kleine Achse der Öffnungen 70, 71 größer als der Durchmesser der Schrauben 72, so daß das Klemmelement 68 sowohl in horizontaler als auch in vertikaler Richtung relativ zum Grundkörper 21 genau verstellt werden kann.

Der ebene Anlageteil 69 geht in einen teilkreisförmig gebogenen Klemmabschnitt 74 über, mit dem das Klemmelement 68 vorzugsweise flächig an den vertikalen Abschnitten der Rahmenteile 4, 5 anliegt (Fig. 2). Die Höhe des Anlageteiles 69 und des Klemmabschnittes 74 entspricht annähernd dem Abstand zwischen den Vorsprüngen 35 bis 42 der Schenkel 27 bis 30 des Grundkörpers 21.

Der Klemmabschnitt 74 ist etwa in halber Höhe mit einer Durchgangsöffnung 75 versehen, in welche bei montiertem Klemmelement 68 das Anschlagelement 65 des jeweiligen Rahmenteiles 4, 5 ragt. Die Umrißform der Durchgangsöffnung 75 ist an den Umriß des Anschlagelementes 65 angepaßt, so daß die Rahmenteile 4, 5 über diese Formschlußverbindung einwandfrei gegenüber dem Grundkörper 21 ausgerichtet werden können. Die Klemmelemente 68 sind so ausgebildet, daß durch Anziehen der Schrauben 72 der Klemmabschnitt 74 fest gegen die Rahmenteile 4, 5 gepreßt wird, die in Verbindung mit der Formschlußverbindung 65, 75 somit einwandfrei am Grundkörper 21 der Verbindungseinrichtung gehalten werden.

Die Rahmenteile 4, 5 des Sitz- und des Rückenteils des Sitzes werden ausschließlich mit der beschriebenen Verbindungseinrichtung am Ständerteil 1 des Ständers 2 befestigt. Der Grundkörper 21 wird auf den Ständerteil 1 gesteckt und mit den Schrauben 19, 20 an ihm befestigt.

Anschließend werden die laschenförmigen Klemmelemente 68 mit den Schrauben 72 am Grundkörper 1 vormontiert. Die Schrauben 72 werden nur so weit in die Gewindebohrungen 73 der Schenkel 27 bis 30 geschraubt, daß sie Halt in den Schenkeln finden. Anschließend werden einzeln der Sitz- und der Rückenteil mit dem Rahmenteil 4, 5 in das vormontierte Klemmelement 68 so eingeschoben, daß das Anschlagelement 65 in die Durchgangsöffnung 75 des vormontierten Klemmelementes 68 einrastet. Anschließend wird das Klemmelement 68 mit den Schrauben 72 so befestigt, daß der Rahmenteil 4 bzw. 5 fest zwischen dem Boden 47 bis 50 der Vertiefungen 43 bis 46 des Grundkörpers 21 und den Klemmabschnitten 74 der Klemmelemente 68 festgeklemmt ist. Auf diese Weise können bei Baugruppen, die aus mehreren nebeneinander angeordneten Sitzen bestehen, die Sitz- und Rückenteile von nur einer Person montiert werden. Da die Anschlagelemente 65 in die Durchgangsöffnungen 75 der Klemmelemente 68 eingreifen, wird in sehr einfacher Weise eine Höhenregulierung des Sitz- und des Rückenteils des jeweiligen Sitzes erreicht. Außerdem wird ein Verrutschen des Sitz- und des Rückenteils bei der Montage zuverlässig verhindert. Der Abstand zwischen dem Sitz- und dem Rückenteil ist so groß, daß Abfall, wie leere Zigarettenschachteln, Zeitungen und dergleichen zwischen Sitz und Rückenteil nach unten fallen können. Dies wird noch dadurch erleichtert, daß zur Befestigung der Sitze eine Zarge nicht vorgesehen ist. Der Grundkörper 21 ist so ausgebildet, daß mit ihm zwei beiderseits des Ständerteiles 1 liegende Sitze montiert werden können.

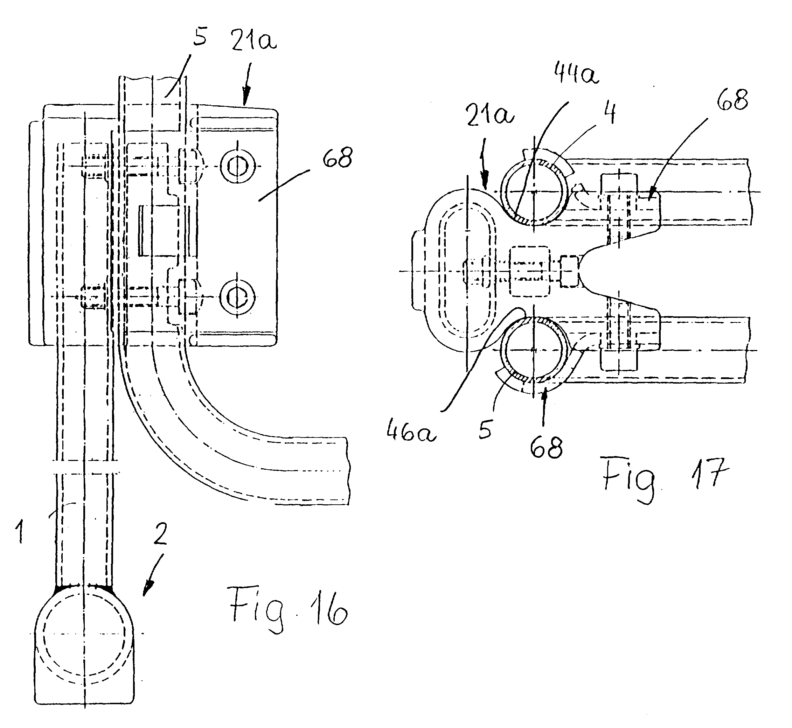

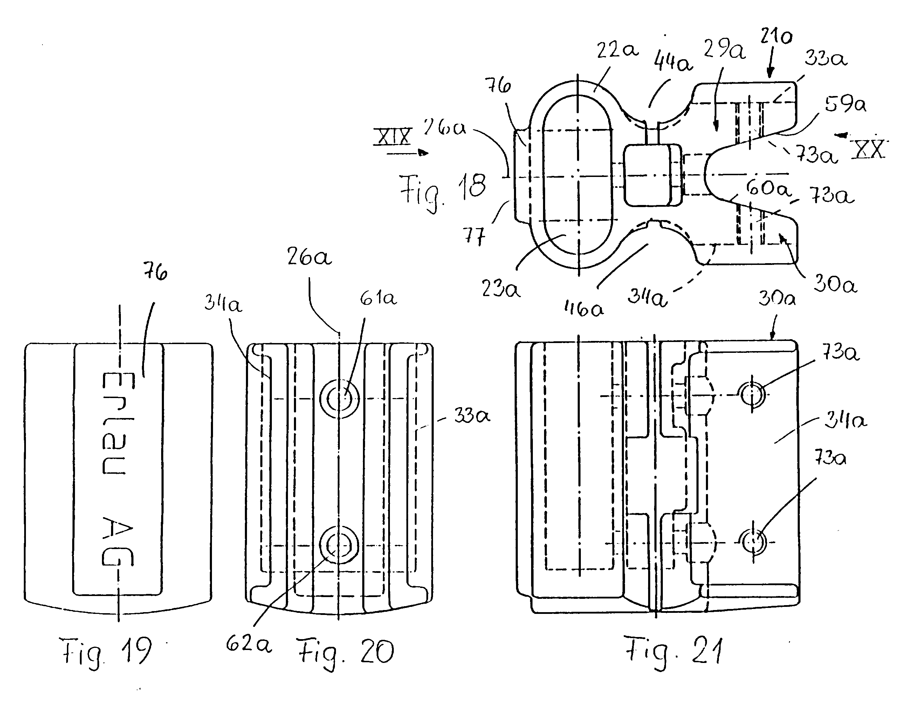

Die Fig. 16 bis 21 zeigen einen Grundkörper 21a, mit dem nur ein Sitz montiert werden kann. Darum wird eine solche Verbindungseinrichtung lediglich am Anfang bzw. Ende einer Baugruppe verwendet (Fig. 22). Der Grundkörper 21a unterscheidet sich von der vorigen Ausführungsform lediglich dadurch, daß der Grundkörper nur die eine Hälfte des Grundkörpers 21 ist. Darum hat der Grundkörper 21a die an den Ständerteil 1 des Ständers 2 angepaßte Aufnahme 23a (Fig. 18) sowie die Schenkel 29a und 30a. Sie sind gleich ausgebildet wie beim vorigen Ausführungsbeispiel und haben die ebenen Anlageflächen 33a, 34a für die Klemmelemente 68. Wie beim vorigen Ausführungsbeispiel sind die Schenkel 29a, 30a von den Gewindebohrungen 73a durchsetzt, die senkrecht zur Längsmittelebene 26a des Grundkörpers 21a liegen und in die Anlageflächen 33a, 34a sowie die jeweils gegenüberliegenden Schrägflächen 59a, 60a der Schenkel 29a, 30a münden. Im gekrümmten Übergangsbereich zwischen den Schrägflächen 59a, 60a des Grundkörpers 21a sind mit Abstand übereinander liegend die Durchgangsöffnungen 61a, 62a vorgesehen, die entsprechend dem vorigen Ausführungsbeispiel in der Längsmittelebene 26a liegen. Das die Aufnahme 23a enthaltende Mittelstück 22a des Grundkörpers 21a weist an der den Schenkeln 29a, 30a gegenüberliegenden Seite einen in Ansicht rechteckigen Vorsprung 76 auf, der eine ebene Stirnseite 77 hat.

Die Rahmenteile 4, 5 werden, wie sich aus den Fig. 16 und 17 ergibt, entsprechend der vorigen Ausführungsform mit den laschenförmigen Klemmelementen 68 in den Vertiefungen 44a, 46a des Grundkörpers 21a in der beschriebenen Weise festgeklemmt.

Der Grundkörper 21a wird lediglich für die endseitigen Sitze einer aus mehreren nebeneinander liegenden Sitzen bestehenden Gruppe verwendet, während für die dazwischen liegenden Sitze der Grundkörper 21 gemäß den Fig. 1 bis 15 herangezogen wird.

## Patentansprüche

1. Einrichtung zur Verbindung wenigstens eines Sitzes mit einem Unterteil (2), mit Klemmelementen (68), mit denen der Sitz am Unterteil (2) befestigbar ist,
dadurch gekennzeichnet, daß die Einrichtung einen Grundkörper (21, 21a) aufweist, der mindestens eine Steckaufnahme (23, 23a) zur Verbindung mit dem Unterteil (2) aufweist, daß der Grundkörper (21, 21a) mit quer zur Steckaufnahme (23, 23a) sich erstreckenden Anlageflächen (31 bis 34; 33a, 34a) für die Klemmelemente (68) versehen ist, die in Klemmstellung mit Anlageteilen (69) an den Anlageflächen (31 bis 34; 33a, 34a) anliegen, und daß der Grundkörper (21, 21a) benachbart zu den Anlageflächen (31 bis 34; 33a, 34a) liegende Vertiefungen (43 bis 46; 44a, 46a) aufweist, in die Rahmenteile (4, 5) des Sitzes eingreifen, die durch die Klemmelemente (68) in den Vertiefungen (43 bis 46; 44a, 46a) festgeklemmt sind.

2. Einrichtung nach Anspruch 1,
dadurch gekennzeichnet, daß die Steckaufnahme (23, 23a) im Bereich neben den Anlageflächen (31 bis 34; 33a, 34a) vorgesehen ist.

3. Einrichtung nach Anspruch 1 oder 2,
dadurch gekennzeichnet, daß das Unterteil (2) einen aufwärts ragenden Ständerteil (1) aufweist, der vorzugsweise in die Steckaufnahme (23, 23a) ragt.

4. Einrichtung nach einem der Ansprüche 1 bis 3,
dadurch gekennzeichnet, daß der Grundkörper (21, 21a) mindestens eine Öffnung (61, 62; 61a, 62a) für Befestigungsteile (19, 20), wie Schrauben, aufweist, mit denen der Grundkörper (21, 21a) am Unterteil (2) befestigbar ist, und daß vorteilhaft das Unterteil (2), vorzugsweise der Ständerteil (1), mindestens einen Gewindeteil (16, 17), vorzugsweise eine Blindmutter, zur Aufnahme der Befestigungsteile (19, 20) aufweist.

5. Einrichtung nach einem der Ansprüche 1 bis 4,
dadurch gekennzeichnet, daß die Anlageflächen (31 bis 34; 33a, 34a) an quer von der Steckaufnahme (23, 23a) abstehenden und parallel zueinander liegenden Schenkeln (27 bis 30; 29a, 30a) vorgesehen sind.

6. Einrichtung nach Anspruch 5,
dadurch gekennzeichnet, daß zumindest an einer Seite der Steckaufnahme (23, 23a) zwei Schenkel (27, 28; 29, 30; 29a, 30a) vorhanden sind.

7. Einrichtung nach Anspruch 6,
dadurch gekennzeichnet, daß die an einer Seite der Steckaufnahme (23, 23a) angeordneten Schenkel (27, 28; 29, 30; 29a, 30a) Abstand voneinander haben.

8. Einrichtung nach einem der Ansprüche 1 bis 7,
dadurch gekennzeichnet, daß die Klemmelemente (68) einen an den Anlageteilen (69) anschließenden Klemmabschnitt (74) aufweisen, der vorteilhaft gekrümmt verläuft und wenigstens ein Formschlußelement (75), vorzugsweise eine Öffnung, für wenigstens ein Gegenformschlußelement (65) des Sitzes aufweist, das vorzugsweise an den Rahmenteilen (4, 5) von Sitz- und Rückenteilen des Sitzes vorgesehen ist.

9. Einrichtung nach einem der Ansprüche 5 bis 8,
dadurch gekennzeichnet, daß die Schenkel (27 bis 30; 29a, 30a) des Grundkörpers (21, 21a) im Bereich der Anlageflächen (31 bis 34; 33a, 34a) wenigstens eine vorteilhaft senkrecht zur Längsmittelebene (26, 26a) des Grundkörpers (21, 21a) liegende Gewindebohrung (73, 73a) aufweisen, die vorzugsweise die Schenkel (27 bis 30; 29a, 30a) des Grundkörpers (21, 21a) durchsetzt.

10. Einrichtung nach einem der Ansprüche 1 bis 9,
dadurch gekennzeichnet, daß die Klemmelemente (68) im Bereich des Anlageteils (69) mindestens eine Durchtrittsöffnung (70, 71) für Schrauben (72) aufweisen, und daß vorzugsweise die lichte Weite der Durchtrittsöffnungen (70, 71) größer ist als der Schaftdurchmesser der Schrauben (72).

11. Einrichtung nach Anspruch 10,
dadurch gekennzeichnet, daß die Durchtrittsöffnungen (70, 71) länglichen, vorzugsweise elliptischen Umriß haben, und daß vorteilhaft die längere Achse der Durchtrittsöffnungen (70, 71) senkrecht zur Achse der Steckaufnahme (23, 23a) liegt.

12. Einrichtung nach einem der Ansprüche 3 bis 11,
dadurch gekennzeichnet, daß der Ständerteil (1) senkrecht von einem Fuß (3) absteht.

## Claims

1. A device for connecting at least one seat to an underpart (2), with clamping elements (68) by which the seat can be fastened to the underpart (2), **characterized in that** the device comprises a main body (21, 21a) which is provided with at least one insertion receptacle (23, 23a) for connexion to the underpart (2), the main body (21, 21a) is provided with abutment faces (31 to 34: 33a, 34a) - extending transversely to the insertion receptacle (23, 23a) - for the clamping elements (68), which abut with abutment parts (69) against the abutment faces (31 to 34; 33a, 34a) in the clamped position, and the main body (21, 21a) has depressions (43 to 46; 44a, 46a) which are situated adjacent to the abutment faces (31 to 34; 33a, 34a) and into which frame parts (4, 5) of the seat engage, which are clamped firmly in the depressions (43 to 46: 44a, 46a) by the clamping elements (68).

2. A device according to Claim 1, **characterized in that** the insertion receptacle (23, 23a) is provided in the region adjacent to the abutment faces (31 to 34: 33a, 34a).

3. A device according to Claim 1 or 2, **characterized in that** the underpart (2) has a stand part (1) which projects upwards and which preferably projects into the insertion receptacle (23, 23a).

4. A device according to one of Claims 1 to 3, **characterized in that** the main body (21, 21a) is provided with at least one opening (61, 62; 61a, 62a) for fastening members (19, 20), such as screws, by which the main body (21, 21a) can be fastened to the underpart (2), and the underpart (2), preferably the stand part (1), is advantageously provided with at least one threaded part (16, 17), preferably a blind-end nut, for receiving the fastening members (19, 20).

5. A device according to one of Claims 1 to 4, **characterized in that** the abutment faces (31 to 34; 33a, 34a) are provided on arms (27 to 30; 29a, 30a) projecting transversely from the insertion receptacle (23, 23a) and arranged parallel to one another.

6. A device according to Claim 5, **characterized in that** two arms (27, 28; 29, 30; 29a, 30a) are provided on at least one side of the insertion receptacle (23, 23a).

7. A device according to Claim 6, **characterized in that** the arms (27, 28; 29, 30; 29a, 30a) arranged on one side of the insertion receptacle (23, 23a) are spaced from one another.

8. A device according to one of Claims 1 to 7, **characterized in that** the clamping elements (68) have a clamping portion (74) which adjoins the abutment parts (69) and which advantageously extends in a curve and is provided with at least one positively locking element (75), preferably an opening, for at least one matching positively locking element (65) of the seat which is preferably provided on the frame parts (4, 5) of the seat part and back part of the seat.

9. A device according to one of Claims 5 to 8, **characterized in that** in the region of the abutment faces (31 to 34; 33a, 34a) the arms (27 to 30; 29a, 30a) of the base body (21, 21a) are provided with at least one threaded bore (73, 73a) which is preferably situated at a right angle to the longitudinal median plane (26, 26a) of the base body (21, 21a) and which preferably passes through the arms (27 to 30; 29a, 30a) of the base body (21, 21a).

10. A device according to one of Claims 1 to 9, **characterized in that** in the region of the abutment part (69) the clamping elements (68) have at least one through-opening (70, 71) for screws (72), and the internal width of the through-openings (70, 71) is preferably greater than the diameter of the stems of the screws (72).

11. A device according to Claim 10, **characterized in that** the through-openings (70, 71) have an elongate, preferably elliptical outline, and the longer axis of the through-openings (70, 71) is preferably situated at a right angle to the axis of the insertion receptacle (23, 23a).

12. A device according to one of Claims 3 to 11, **characterized in that** the stand part (1) projects perpendicularly from a foot (3).

## Revendications

1. Dispositif pour fixer au moins un siège sur un support (2), comprenant des éléments de serrage (68) au moyen duquel le siège peut être fixé sur le support (2),
caractérisé en ce que le dispositif comprend un corps de base (21, 21a) qui présente au moins un logement à enfichage (23, 23a) pour la liaison avec le support (2), en ce que le corps de base (21, 21a) est pourvu de surfaces d'appui (31 à 34 ; 33a, 34a), qui s'étendent perpendiculaire-ment au logement à enfichage (23, 23a), pour les éléments de serrage (68), lesquels s'appuient dans la position de serrage par des parties d'appui (69) contre les surfaces d'appui (31 à 34 ; 33a, 34a), et en ce que le corps de base (21, 21a) présente, au voisinage des surfaces d'appui (31 à 34 ; 33a, 34a), des renfoncements (43 à 46 ; 44a, 46a), dans lesquels s'engagent des parties (4, 5) du cadre du siège, qui sont fermement bloquées dans les renfoncements (43 à 46 ; 44a, 46a) par les éléments de serrage (68).

2. Dispositif selon la revendication 1,
caractérisé en ce que le logement à enfichage (23, 23a) est prévu dans la région à côté des surfaces d'appui (31 à 34 ; 33a, 34a).

3. Dispositif selon l'une ou l'autre des revendications 1 et 2,
caractérisé en ce que le support (2) comprend une partie de montant (1) dressée vers le haut, qui s'engage de préférence dans le logement à enfichage (23,23a).

4. Dispositif selon l'une des revendications 1 à 3,
caractérisé en ce que le corps de base (21, 21a) présente au moins une ouverture (61, 62 ; 61a, 62a) pour des pièces de fixation (19, 20), comme des vis, au moyen desquelles le corps de base (21, 21a) peut être fixé sur le support (2), et en ce que le support (2), de préférence la partie de montant (1), comporte au moins une partie à pas de vis (16, 17), de préférence un écrou borgne, pour la réception des pièces de fixation (19, 20).

5. Dispositif selon l'une des revendications 1 à 4,
caractérisé en ce que les surfaces d'appui (31 à 34 ; 33a, 34a) sont prévues sur des bras (27 à 30 ; 29a, 30a), qui dépasse perpendiculaire-ment depuis le logement à enfichage (23, 23a) et s'étendent parallèlement l'un à l'autre.

6. Dispositif selon la revendication 5,
caractérisé en ce qu'il est prévu deux bras (27, 28 ; 29, 30 ; 29a, 30a), au moins sur un côté du logement à enfichage (23, 23a).

7. Dispositif selon la revendication 6,
caractérisé en ce que les bras (27, 28 ; 29, 30 ; 29a, 30a) agencés sur un côté du logement à enfichage (23, 23a) sont à distance l'un de l'autre.

8. Dispositif selon l'une des revendications 1 à 7, caractérisé en ce que les éléments de serrage (68) comprennent un tronçon de serrage (74) qui se raccorde à l'une des parties d'appui (69), qui s'étend de préférence sous forme coudée et présente au moins un élément à coopération de formes (75), de préférence une ouverture, pour au moins un élément complémentaire à coopération de formes (65) du siège, prévu de préférence sur les parties (4, 5) du cadre de la partie de dossier et de la partie d'assise du siège.

9. Dispositif selon l'une des revendications 5 à 8,
caractérisé en ce que les bras (27 à 30 ; 29a, 30a) du corps de base (21, 21a) présentent dans la région des surfaces d'appui (31 à 34 ; 33a, 34a) au moins un perçage taraudé (73, 73a) disposé avantageusement perpendiculairement au plan longitudinal médian (26, 26a) du corps de base (21, 21a), qui traverse de préférence les bras (27 à 30 ; 29a, 30a) du corps de base (21, 21a).

10. Dispositif selon l'une des revendications 1 à 9,
caractérisé en ce que les éléments de serrage (68) présentent dans la région de la partie d'appui (69) au moins une ouverture traversante (70, 71) pour des vis (72), et en ce que la largeur libre des ouvertures traversantes (70, 71) est de préférence supérieure au diamètre du fût des vis (72).

11. Dispositif selon la revendication 10,
caractérisé en ce que les ouvertures traversantes (70, 71) ont un contour oblong, de préférence elliptique, et en ce que le grand axe des ouvertures traversantes (70, 71) est disposé avantageusement perpendiculairement à l'axe du logement à enfichage (23,23a).

12. Dispositif selon l'une des revendications 3 à 11,
caractérisé en ce que la partie de montant (1) dépasse verticalement depuis un pied (3).
